# EUROPEAN PATENT APPLICATION

(11) **EP 4 822 841 A1**
(43) Date of publication of application: **14.10.2026**
(21) Application number: 24899982.3
(22) Date of filing: 06.12.2024
(51) Int. Cl.: H01M 50/184, H01M 50/188, H01M 10/04

(54) **BATTERY AND ELECTRIC DEVICE**

(30) Priority: 07.12.2023 CN 202311670348
(71) Applicant: SVOLT Energy Technology Co., Ltd., Changzhou, Jiangsu 213200 (CN)
(72) Inventor: SUN, Chao, hangzhou, Jiangsu 213200 (CN); GONG, Weihong, hangzhou, Jiangsu 213200 (CN); YUAN, Yue, hangzhou, Jiangsu 213200 (CN)
(74) Representative: Michalski Hüttermann & Partner mbB
(86) International application number: PCT/CN2024/137516
(87) International publication number: WO 2025/119349

(57) **Abstract**

A battery and an electric device. The battery comprises: a plate body (3), through holes being formed in the plate body in a penetrating manner; poles (5) at least partially passing through the through holes in the axial direction, each pole (5) being provided with an abutment portion (51) abutting against a first side of the plate body (3) and a penetrating portion (52) penetrating out of a second side of the plate body (3); mounting members (1) riveted to the penetrating portions (52); first insulating members (2) abutted between the mounting members (1) and the second side of the plate body (3); second insulating members (4) abutted between the abutment portions (51) and the first side of the plate body (3); and multi-layer seal rings (6) sleeved on the outer peripheries of the poles (5), each multi-layer seal ring (6) being arranged in a stepped and layer-staggered manner, and each layer of each multi-layer seal ring (6) abutting against the corresponding first insulating member (2), the plate body (3) and the corresponding second insulating member (4) respectively in the radial direction and compressing in the axial direction. The multi-layer seal rings (6) can improve the sealing performance and insulation performance between the poles (5) and the plate body (3), so that the battery can adapt to a larger energy density, thereby avoiding liquid leakage of the battery.

## Description

### CROSS-REFERENCE TO RELATED APPLICATIONS

The present disclosure claims priority to Chinese Patent Application No. 202311670348.7, filed with the China National Intellectual Property Administration on December 7, 2023 and entitled "BATTERY AND ELECTRIC DEVICE", which is incorporated herein by reference in its entirety.

### TECHNICAL FIELD

The present disclosure relates to the technical field of electric devices, and specifically relates to a battery and an electric device.

### BACKGROUND

With continuous development of the battery industry, energy density of batteries continuously increases. To enhance overall safety performance of the battery, sealing and insulation treatment between an electrode post and a plate body is required.

A battery cover, as an important component to ensure safety of a cell, is provided with a seal ring that plays a crucial role in sealing and insulating the entire battery. In the conventional battery cover in a riveted structure, insulation between the electrode post and the plate body is achieved by compressing the seal ring. However, with the increase of energy density, the sealing effect of the seal ring in the prior art is not ideal, and a risk of electrolyte leakage exists.

### SUMMARY

In view of this, the present disclosure provides a battery and an electric device, to solve the problem of insufficient sealing of the seal ring leading to electrolyte leakage.

In a first aspect, the present disclosure provides a battery, which includes:
a plate body, where a through hole is formed through the plate body;
an electrode post at least partially extending through the through hole along an axial direction, where the electrode post has an abutment portion abutting against a first side of the plate body and a penetrating portion penetrating out of a second side of the plate body;
a mounting member, adapted to fixedly connect the penetrating portion with the plate body;
a first insulating member, abutted between the mounting member and the second side of the plate body;
a second insulating member, abutted between the abutment portion and the first side of the plate body; and
a multi-layer seal ring, sleeved on an outer peripheral side of the electrode post, where the multi-layer seal ring is staggeredly arranged in a stepped manner, and each layer of the multi-layer seal ring abuts against the first insulating member, the plate body and the second insulating member in an radial direction and compresses the first insulating member, the plate body and the second insulating member in an axial direction.

Beneficial effects: The battery provided by the present disclosure arranges a multi-layer seal ring between the electrode post and the plate body, the multi-layer seal ring is staggeredly arranged in a stepped manner, and each layer of the multi-layer seal ring abuts against the first insulating member, the plate body and the second insulating member in an radial direction and compresses the first insulating member, the plate body and the second insulating member in an axial direction. Therefore, the multi-layer seal ring can be well sealed with the first insulating member, the plate body, and the second insulating member simultaneously, thereby improving sealing performance and insulating performance between the electrode post and the plate body, adapting to higher energy density, and preventing electrolyte leakage.

In an optional embodiment, the multi-layer seal ring includes three seal layers, and the three seal layers are arranged axially in a three-layer stepped manner.

Beneficial effects: With the configuration of the three-layer seal ring, the three seal layers can be well sealed with the first insulating member, the plate body, and the second insulating member simultaneously, ensuring good sealing at each position, so that cooperation among the three positions reduces leakage points.

In an optional embodiment, a first overlap amount between a first seal layer of the multi-layer seal ring and the second insulating member is d, d satisfies: d = A/2 - a/2, a first layer overlap ratio between the first seal layer of the multi-layer seal ring and a first layer of the second insulating member is ds, and ds satisfies: ds = d / (A/2 - B/2), where A is an aperture of the first seal layer of the multi-layer seal ring, a is an aperture of the second insulating member, and B is an aperture of a second seal layer of the multi-layer seal ring; the first overlap amount refers to a size of an overlapping region in the axial direction between the first seal layer of the multi-layer seal ring and the second insulating member, and the first layer overlap ratio refers to a proportion of the first overlap amount relative to a size of the first seal layer of the multi-layer seal ring in the axial direction;
and/or, a second overlap amount between a second seal layer of the multi-layer seal ring and the plate body is e, e satisfies: e = B/2 - b/2, a second layer overlap ratio between the second seal layer of the multi-layer seal ring and a second layer of the plate body is es, and es satisfies: es = e / (B/2 - C/2), where B is an aperture of the second seal layer of the multi-layer seal ring, b is an aperture of the through hole of the plate body, and C is an aperture of a third seal layer of the multi-layer seal ring; the second overlap amount refers to a size of an overlapping region in the axial direction between the second seal layer of the multi-layer seal ring and the plate body, and the second layer overlap ratio refers to a proportion of the second overlap amount relative to a size of the second seal layer of the multi-layer seal ring in the axial direction;
and/or, a third overlap amount between a third seal layer of the multi-layer seal ring and the first insulating member is f, f satisfies: f = C/2 - c/2, a third layer overlap ratio between the third seal layer of the multi-layer seal ring and a third layer of the first insulating member is fs, and fs satisfies: fs = f / (C/2 - D/2), where C is an aperture of the third seal layer of the multi-layer seal ring, c is an aperture of the first insulating member, and D is a diameter of the electrode post; and the third overlap amount refers to a size of an overlapping region in the axial direction between the third seal layer of the multi-layer seal ring and the first insulating member, and the third layer overlap ratio refers to a proportion of the third overlap amount relative to a size of the third seal layer of the multi-layer seal ring in the axial direction.

Beneficial effects: By defining the overlap amounts of each seal layer of the multi-layer seal ring with the first insulating member, the plate body, and the second insulating member, each layer can achieve radial sealing, thereby ensuring sealing performance.

In an optional embodiment, the first overlap amount d between the first seal layer of the multi-layer seal ring and the second insulating member has a range of 0.2 mm ≤ d ≤ 0.8 mm; the first layer overlap ratio ds between the first seal layer of the multi-layer seal ring and the first layer of the second insulating member has a range of 20% ≤ ds ≤ 80%;
and/or, the second overlap amount e between the second seal layer of the multi-layer seal ring and the plate body has a range of 0.35 mm ≤ e ≤ 0.75 mm; the second layer overlap ratio es between the second seal layer of the multi-layer seal ring and the second layer of the plate body has a range of 35% ≤ es ≤ 75%;
and/or, the third overlap amount f between the third seal layer of the multi-layer seal ring and the first insulating member has a range of 0.2 mm ≤ f ≤ 0.5 mm; and the third layer overlap ratio fs between the third seal layer of the multi-layer seal ring and the third layer of the first insulating member has a range of 33.3% ≤ fs ≤ 83.3%.

Beneficial effects: According to the battery provided by the present disclosure, by limiting the lower limits of the overlap amounts d, e, and f, too small sealing areas of the multi-layer seal ring can be avoided, thereby preventing adverse effects on the sealing performance and insulating performance of the internal seal ring of the battery. By limiting the upper limits of the overlap amounts d, e, and f, excessive contact areas of the multi-layer seal ring can be avoided, thereby preventing increased cost of the seal ring, preventing increase in battery weight, and ensuring a lightweight design.

In an optional embodiment, a compression amount of the first seal layer of the multi-layer seal ring is x, and x satisfies x = M - m, where M is an original height of the first seal layer of the multi-layer seal ring, and m is a distance between a bottom surface of the second insulating member in the axial direction and a bottom surface of the multi-layer seal ring in the axial direction;
and/or, a compression amount of the second seal layer of the multi-layer seal ring is y, and y satisfies y = N - n, where N is an original height of the second seal layer of the multi-layer seal ring, and n is a distance between a bottom surface of the plate body in the axial direction and a bottom surface of the multi-layer seal ring along the axial direction;
and/or, a compression amount of the third seal layer of the multi-layer seal ring is z, and z satisfies z = O - o, where O is an original height of the third seal layer of the multi-layer seal ring, and o is a distance between a bottom surface of the first insulating member in the axial direction and a bottom surface of the multi-layer seal ring along the axial direction.

Beneficial effects: Since the multi-layer seal ring is made of a soft material, the multi-layer seal ring can have a certain compression amount after installation to ensure sealing performance. Meanwhile, each layer of the multi-layer seal ring has a compression amount, which can effectively ensure that each layer is well compressed, ensuring the sealing performance of each layer, thereby guaranteeing overall sealing performance and insulating performance, adapting to higher energy density, and preventing electrolyte leakage.

In an optional embodiment, the compression amount x of the first seal layer of the multi-layer seal ring has a range of 0.15 mm ≤ x ≤ 0.3 mm;
and/or, the compression amount y of the second seal layer of the multi-layer seal ring has a range of 0.35 mm ≤ y ≤ 0.7 mm;
and/or, the compression amount z of the third seal layer of the multi-layer seal ring has a range of 0.15 mm ≤ z ≤ 0.3 mm.

In an optional embodiment, a compression ratio of the first seal layer of the multi-layer seal ring is X₁, and X₁ satisfies X₁ = x / M;
and/or, a compression ratio of the second seal layer of the multi-layer seal ring is X₂, and X₂ satisfies X₂ = y / N;
and/or, a compression ratio of the third seal layer of the multi-layer seal ring is X₃, and X₃ satisfies X₃ = z / O.

In an optional embodiment, the compression ratio X₁ of the first seal layer of the multi-layer seal ring has a range of 30%-60%;
and/or, the compression ratio X₂ of the second seal layer of the multi-layer seal ring has a range of 30%-65%;
and/or, the compression ratio X₃ of the third seal layer of the multi-layer seal ring has a range of 6%-12%.

Beneficial effects: By limiting the lower limit of the compression ratio of each layer of the multi-layer seal ring, a too-small compression ratio that would reduce the radial compression amount and compression ratio of the three seal layers can be avoided, thereby preventing adverse effects on the sealing performance and insulating performance of the internal seal ring of the battery cover. Furthermore, by limiting the upper limit of the compression ratio of each layer of the multi-layer seal ring, excessive compression ratio that would increase the cost of the multi-layer seal ring or increase the weight of the battery can be avoided, thereby satisfying lightweight design requirements.

In an optional embodiment, the compression ratio X₁ of the first seal layer of the multi-layer seal ring is 40%;
and/or, the compression ratio X₂ of the second seal layer of the multi-layer seal ring is 40%;
and/or, the compression ratio X₃ of the third seal layer of the multi-layer seal ring is 10%.

In a second aspect, the present disclosure further provides an electric device, which includes the battery described above.

### BRIEF DESCRIPTION OF DRAWINGS

To describe the technical solutions in specific implementations of the present disclosure or in the conventional technology more clearly, the following briefly describes the drawings for describing specific implementations or the conventional technology. It is clear that the drawings in the following descriptions show merely some embodiments of the present disclosure, and those of ordinary skill in the art may still derive other drawings from these drawings without inventive efforts.
FIG. 1 is a schematic diagram of a battery according to the present disclosure;
FIG. 2 is a partial sectional schematic diagram I of a battery according to the present disclosure;
FIG. 3 is a partial sectional schematic diagram II of a battery according to the present disclosure; and
FIG. 4 is a partial sectional schematic diagram III of a battery according to the present disclosure.

### Description of reference numerals:

1. mounting member; 2. first insulating member; 3. plate body; 4. second insulating member; 5. electrode post; 51. abutment portion; 52. penetrating portion; and 6. multi-layer seal ring.

### DETAILED DESCRIPTION OF EMBODIMENTS

To make the objectives, technical solutions, and advantages of embodiments of the present disclosure clearer, the following clearly and completely describes the technical solutions in embodiments of the present disclosure with reference to the drawings in embodiments of the present disclosure. It is clear that the described embodiments are merely some rather than all of embodiments of the present disclosure. All other embodiments obtained by a person skilled in the art based on the embodiments of the present disclosure without creative efforts shall fall within the protection scope of the present disclosure.

In the description of the present disclosure, it should be noted that terms such as "center", "up", "down", "left", "right", "perpendicular", "horizontal", "inside", "outside" and the like refer to positional relationships based on the orientation or position shown in the drawings, which are for convenience of description and simplification only, and are not intended to indicate or imply that the devices or components must have a specific orientation or be constructed and operated in a specific orientation. Therefore, these terms should not be understood as limiting the present disclosure. In addition, the terms "first", "second", and "third" are merely intended for differentiated description, and should not be construed as an indication or an implication of relative importance.

In the description of the present disclosure, it should be noted that, unless otherwise explicitly specified or limited, the terms "install", "connected", and "connection" should be understood in a broad sense. For example, the terms may refer to fixed connection, detachable connection, or integral connection; may refer to mechanical connection or electrical connection; may refer to direct connection or indirect connection through an intermediate medium; and may also refer to communication between two components internally. Those of ordinary skill in the art may interpret specific meanings of the foregoing terms in the present disclosure according to specific cases.

In addition, the technical features involved in the various embodiments of the present disclosure described below can be combined with each other as long as no conflict exists therebetween.

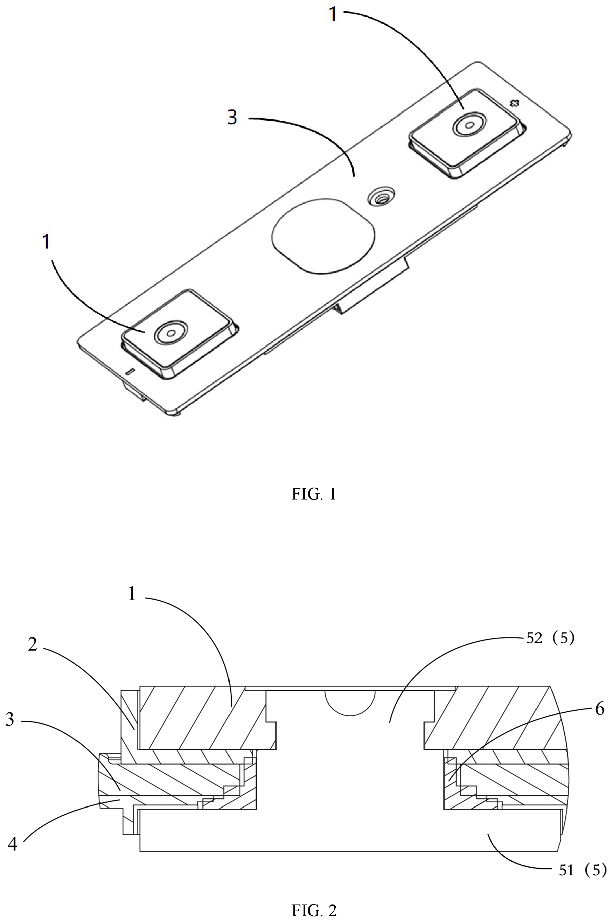

The following describes embodiments of the present disclosure with reference to FIGS. 1 to 4.

According to an embodiment of the present disclosure, in a first aspect, a battery is provided, which includes:
a plate body 3, where a through hole is formed through the plate body 3;
an electrode post 5 at least partially extending through the through hole along an axial direction, where the electrode post 5 has an abutment portion 51 abutting against a first side of the plate body 3 and a penetrating portion 52 penetrating out of a second side of the plate body 3;
a mounting member 1, adapted to fixedly connect the penetrating portion 52 with the plate body 3;
a first insulating member 2, abutted between the mounting member 1 and the second side of the plate body 3;
a second insulating member 4, abutted between the abutment portion 51 and the first side of the plate body 3; and
a multi-layer seal ring 6, sleeved on an outer peripheral side of the electrode post 5, where the multilayer seal ring 6 is staggeredly arranged in a stepped manner, and each layer of the multilayer seal ring 6 abuts against the first insulating member 2, the plate body 3 and the second insulating member 4 in an radial direction and compresses the first insulating member 2, the plate body 3 and the second insulating member 4 in an axial direction.

The battery further includes a housing, and an electrode assembly is accommodated in the housing. In one implementation, the plate body 3 and the housing are integrally configured, where the plate body 3 is formed by one wall surface of the housing. In another implementation, the plate body 3 and the housing are configured separately. In this case, the housing is formed with an opening, and the plate body 3 is disposed to cover the opening of the housing and is sealingly connected to edges of the housing via the plate body 3, such that the plate body 3 and the housing together define a cavity for accommodating the electrode assembly.

According to the battery provided in an embodiment of the present disclosure, a multi-layer seal ring 6 is arranged between the electrode post 5 and the plate body 3, the multi-layer seal ring 6 is staggeredly arranged in a stepped manner, and each layer of the multi-layer seal ring 6 abuts against the first insulating member 2, the plate body 3 and the second insulating member 4 in an radial direction and compresses the first insulating member 2, the plate body 3 and the second insulating member 4 in an axial direction. Therefore, the multi-layer seal ring 6 can be well sealed with the first insulating member 2, the plate body 3, and the second insulating member 4 simultaneously, thereby improving sealing performance and insulating performance between the electrode post 6 and the plate body, adapting to higher energy density, and preventing electrolyte leakage.

In addition, the battery in this embodiment achieves a connection between the electrode post and the plate body by riveting. For a battery in which the connection between the electrode post and the plate body is implemented by a non-riveting manner, the multi-layer seal ring 6 is also applicable, for example, by threaded connection, snap-fit connection, or adhesive connection.

In some embodiments, with reference to FIG. 2, the multi-layer seal ring 6 includes three seal layers, and the three seal layers are arranged axially in a three-layer stepped manner.

With the configuration of the three-layer seal ring, the three seal layers can be well sealed with the first insulating member 2, the plate body 3, and the second insulating member 4 simultaneously, ensuring good sealing at each position, so that cooperation among the three positions reduces leakage points.

With reference to FIG. 2, the three seal layers of the multi-layer seal ring are arranged in a three-layer stepped configuration along the axial direction, and the apertures of the three steps decrease sequentially in the axial direction.

Additionally, the multi-layer seal ring 6 can alternatively be four layers, five layers, or more layers of seal rings.

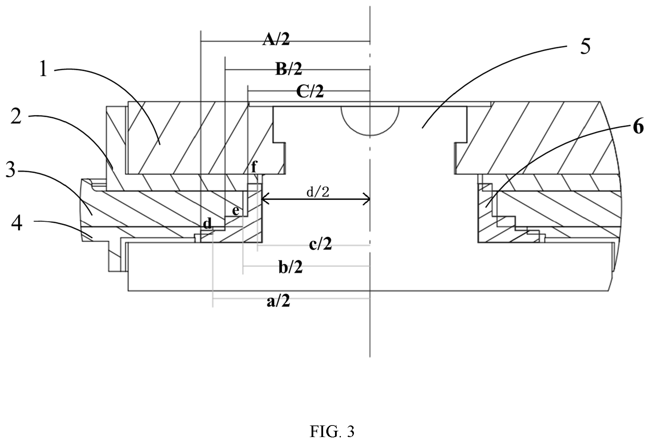

In some embodiments, with reference to FIG. 3, a first overlap amount between a first seal layer of the multi-layer seal ring 6 and the second insulating member 4 is d, d satisfies: d = A/2 - a/2, a first layer overlap ratio between the first seal layer of the multi-layer seal ring 6 and a first layer of the second insulating member 4 is ds, and ds satisfies: ds = d / (A/2 - B/2), where A is an aperture of the first seal layer of the multi-layer seal ring 6, a is an aperture of the second insulating member 4, and B is an aperture of a second seal layer of the multi-layer seal ring 6; the first overlap amount refers to a size of an overlapping region in the axial direction between the first seal layer of the multi-layer seal ring 6 and the second insulating member 4, and the first layer overlap ratio refers to a proportion of the first overlap amount relative to a size of the first seal layer of the multi-layer seal ring 6 in the axial direction;
and/or, a second overlap amount between a second seal layer of the multi-layer seal ring 6 and the plate body 3 is e, e satisfies: e = B/2 - b/2, a second layer overlap ratio between the second seal layer of the multi-layer seal ring 6 and a second layer of the plate body 3 is es, and es satisfies: es = e / (B/2 - C/2), where B is an aperture of the second seal layer of the multi-layer seal ring 6, b is an aperture of the through hole of the plate body 3, and C is an aperture of a third seal layer of the multi-layer seal ring 6; the second overlap amount refers to a size of an overlapping region in the axial direction between the second seal layer of the multi-layer seal ring 6 and the plate body 3, and the second layer overlap ratio refers to a proportion of the second overlap amount relative to a size of the second seal layer of the multi-layer seal ring 6 in the axial direction;
and/or, a third overlap amount between a third seal layer of the multi-layer seal ring 6 and the first insulating member 2 is f, f satisfies: f = C/2 - c/2, a third layer overlap ratio between the third seal layer of the multi-layer seal ring 6 and a third layer of the first insulating member 2 is fs, and fs satisfies: fs = f / (C/2 - D/2), where C is an aperture of the third seal layer of the multi-layer seal ring 6, c is an aperture of the first insulating member 2, and D is a diameter of the electrode post 5; and the third overlap amount refers to a size of an overlapping region in the axial direction between the third seal layer of the multi-layer seal ring 6 and the first insulating member 2, and the third layer overlap ratio refers to a proportion of the third overlap amount relative to a size of the third seal layer of the multi-layer seal ring 6 in the axial direction.

The first overlap amount between the first seal layer of the multi-layer seal ring 6 and the second insulating member 4 is d, and d is specifically a difference between an aperture of the first seal layer of the multi-layer seal ring 6 in the axial direction and an aperture of the second insulating member 4. Similarly, the second overlap amount e between the second seal layer of the multi-layer seal ring 6 and the plate body 3 is specifically a difference between an aperture of the second seal layer of the multi-layer seal ring 6 in the axial direction and an aperture of the through hole of the plate body 3. The third overlap amount f between the third seal layer of the multi-layer seal ring 6 and the first insulating member 2 is specifically a difference between an aperture of the third seal layer of the multi-layer seal ring 6 in the axial direction and an aperture of the first insulating member 2.

By defining the overlap amounts of each seal layer of the multi-layer seal ring 6 with the first insulating member 2, the plate body 3, and the second insulating member 4, each layer can achieve radial sealing, thereby ensuring sealing performance.

By limiting a layer overlap ratio of each seal layer of the multi-layer seal ring 6 relative to the first insulating member 2, the plate body 3, and the second insulating member 4, a sealing effect of the multi-layer seal ring 6 can be ensured, and the damage caused by excessive compression of the multi-layer seal ring 6 is avoided.

In some embodiments, with reference to FIG. 3, the first overlap amount d between the first seal layer of the multi-layer seal ring 6 and the second insulating member 4 has a range of 0.2 mm ≤ d ≤ 0.8 mm; the first layer overlap ratio ds between the first seal layer of the multi-layer seal ring 6 and the first layer of the second insulating member 4 has a range of 20% ≤ ds ≤ 80%;
and/or, the second overlap amount e between the second seal layer of the multi-layer seal ring 6 and the plate body 3 has a range of 0.35 mm ≤ e ≤ 0.75 mm; the second layer overlap ratio es between the second seal layer of the multi-layer seal ring 6 and the second layer of the plate body 3 has a range of 35% ≤ es ≤ 75%;
and/or, the third overlap amount f between the third seal layer of the multi-layer seal ring 6 and the first insulating member 2 has a range of 0.2 mm ≤ f ≤ 0.5 mm; and the third layer overlap ratio fs between the third seal layer of the multi-layer seal ring 6 and the third layer of the first insulating member 2 has a range of 33.3% ≤ fs ≤ 83.3%.

Optionally, the first overlap amount d between the first seal layer of the multi-layer seal ring 6 and the second insulating member 4 can be 0.2 mm, 0.3 mm, 0.4 mm, 0.5 mm, 0.6 mm, 0.7 mm, or 0.8 mm.

Optionally, the second overlap amount e between the second seal layer of the multi-layer seal ring 6 and the plate body 3 can be 0.35 mm, 0.45 mm, 0.55 mm, 0.65 mm, or 0.75 mm.

Optionally, the third overlap amount f between the third seal layer of the multi-layer seal ring 6 and the first insulating member 2 can be 0.2 mm, 0.3 mm, 0.4 mm, or 0.5 mm.

In an optional embodiment, the overlap amounts d, e, and f are 0.5 mm, 0.75 mm, and 0.45 mm, respectively.

According to the battery provided in an embodiment of the present disclosure, by limiting the lower limits of the overlap amounts d, e, and f, too small sealing areas of the multi-layer seal ring 6 can be avoided, thereby preventing adverse effects on the sealing performance and insulating performance of the internal seal ring of the battery. By limiting the upper limits of the overlap amounts d, e, and f, excessive contact areas of the multi-layer seal ring 6 can be avoided, thereby preventing increased cost of the seal ring, preventing increase in battery weight, and ensuring a lightweight design.

Since the plate body is made of a rigid material, the range of the overlap amount e is relatively large. Furthermore, because the plate body requires a greater overlap amount with the seal ring than a plastic material does, the range of the overlap amount e is greater than the ranges of the overlap amounts d and f.

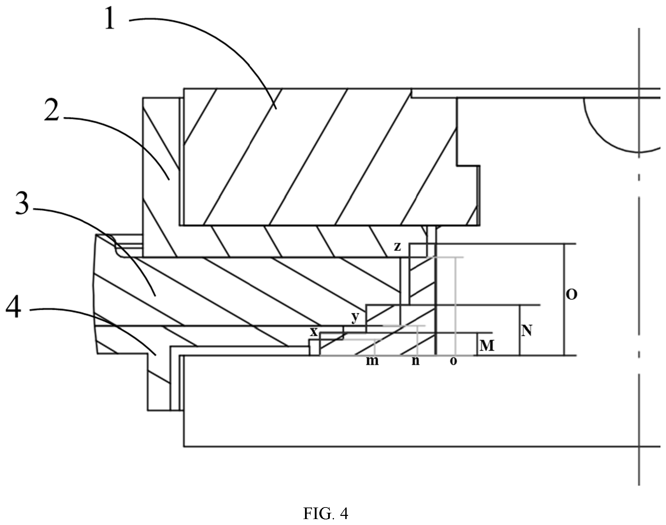

In some embodiments, with reference to FIG. 4, a compression amount of the first seal layer of the multi-layer seal ring 6 is x, and x satisfies x = M - m, where M is an original height of the first seal layer of the multi-layer seal ring 6, and m is a distance between a bottom surface of the second insulating member 4 in the axial direction and a bottom surface of the multi-layer seal ring 6 in the axial direction;
and/or, a compression amount of the second seal layer of the multi-layer seal ring 6 is y, and y satisfies y = N - n, where N is an original height of the second seal layer of the multi-layer seal ring 6, and n is a distance between a bottom surface of the plate body 3 in the axial direction and a bottom surface of the multi-layer seal ring 6 along the axial direction;
and/or, a compression amount of the third seal layer of the multi-layer seal ring 6 is z, and z satisfies z = O - o, where O is an original height of the third seal layer of the multi-layer seal ring 6, and o is a distance between a bottom surface of the first insulating member 2 in the axial direction and a bottom surface of the multi-layer seal ring 6 along the axial direction.

Since the multi-layer seal ring 6 is made of a soft material, the multi-layer seal ring 6 can have a certain compression amount after installation to ensure sealing performance. Meanwhile, each layer of the multi-layer seal ring 6 has a compression amount, which can effectively ensure that each layer is well compressed, ensuring the sealing performance of each layer, thereby guaranteeing overall sealing performance and insulating performance, adapting to higher energy density, and preventing electrolyte leakage.

The compression amount x of the first seal layer of the multi-layer seal ring 6 specifically refers to a difference between an original height of the first seal layer of the multi-layer seal ring 6 and a distance between a bottom surface of the second insulating member 4 in the axial direction and a bottom surface of the multi-layer seal ring 6 in the axial direction. The compression amount y of the second seal layer of the multi-layer seal ring 6 specifically refers to a difference between an original height of the second seal layer of the multi-layer seal ring 6 and a distance between a bottom surface of the plate body 3 in the axial direction and a bottom surface of the multi-layer seal ring 6 in the axial direction. The compression amount z of the third seal layer of the multi-layer seal ring 6 specifically refers to a difference between an original height of the third seal layer of the multi-layer seal ring 6 and a distance between a bottom surface of the first insulating member 2 in the axial direction and a bottom surface of the multi-layer seal ring 6 in the axial direction.

In some embodiments, with reference to FIG. 4, the compression amount x of the first seal layer of the multi-layer seal ring 6 has a range of 0.15 mm ≤ x ≤ 0.3 mm;
and/or, the compression amount y of the second seal layer of the multi-layer seal ring 6 has a range of 0.35 mm ≤ y ≤ 0.7 mm;
and/or, the compression amount z of the third seal layer of the multi-layer seal ring 6 has a range of 0.15 mm ≤ z ≤ 0.3 mm.

Optionally, the compression amount x of the first seal layer of the multi-layer seal ring 6 can be 0.15 mm, 0.2 mm, 0.25 mm, or 0.3 mm.

Optionally, the compression amount y of the second seal layer of the multi-layer seal ring 6 can be 0.35 mm, 0.5 mm, 0.6 mm, or 0.7 mm.

Optionally, the compression amount z of the third seal layer of the multi-layer seal ring 6 can be 0.15 mm, 0.2 mm, 0.25 mm, or 0.3 mm.

In an optional embodiment, the compression amounts x, y, and z are 0.2 mm, 0.5 mm, and 0.3 mm, respectively.

In some embodiments, a compression ratio of the first seal layer of the multi-layer seal ring 6 is X₁, and X₁ satisfies X₁ = x / M;
and/or, a compression ratio of the second seal layer of the multi-layer seal ring 6 is X₂, and X₂ satisfies X₂ = y / N;
and/or, a compression ratio of the third seal layer of the multi-layer seal ring 6 is X₃, and X₃ satisfies X₃ = z / O.

In some embodiments, the compression ratio X₁ of the first seal layer of the multi-layer seal ring 6 has a range of 30%-60%;
and/or, the compression ratio X₂ of the second seal layer of the multi-layer seal ring 6 has a range of 30%-65%;
and/or, the compression ratio X₃ of the third seal layer of the multi-layer seal ring 6 has a range of 6%-12%.

By limiting the lower limit of the compression ratio of each layer of the multi-layer seal ring 6, a too-small compression ratio that would reduce the radial compression amount and compression ratio of the three seal layers can be avoided, thereby preventing adverse effects on the sealing performance and insulating performance of the internal seal ring of the battery cover. Furthermore, by limiting the upper limit of the compression ratio of each layer of the multi-layer seal ring 6, excessive compression ratio that would increase the cost of the multi-layer seal ring 6 or increase the weight of the battery can be avoided, thereby satisfying lightweight design requirements.

An increase in the compression amount and the compression ratio increases a deformation of the multi-layer seal ring 6, thereby affecting sealing and insulating performance between the mounting member 1 and the plate body 3.

In some embodiments, the compression ratio X₁ of the first seal layer of the multi-layer seal ring 6 is 40%;
and/or, the compression ratio X₂ of the second seal layer of the multi-layer seal ring 6 is 40%;
and/or, the compression ratio X₃ of the third seal layer of the multi-layer seal ring 6 is 10%.

The sealing and insulating performance of the battery cover is illustrated below by specific embodiments.

**Table 1 Experimental results of the embodiment (unit: mm)**

| | Exam ple 01 | Exam ple 02 | Exam ple 03 | Exam ple 04 | Exam ple 05 | Exam ple 06 | Exam ple 07 | Exam ple 08 | Exam ple 09 | Exam ple 10 | Exam ple 11 | Exam ple 12 |
|---|---|---|---|---|---|---|---|---|---|---|---|---|
| First overlap amount d | 0.2 | 0.25 | 0.30 | 0.35 | 0.40 | 0.45 | 0.50 | 0.55 | 0.60 | 0.65 | 0.70 | 0.8 |
| Second overlap amount e | 0.35 | 0.40 | 0.45 | 0.50 | 0.55 | 0.60 | 0.65 | 0.70 | 0.40 | 0.50 | 0.60 | 0.75 |
| Third overlap amount f | 0.2 | 0.25 | 0.3 | 0.35 | 0.4 | 0.45 | 0.5 | 0.2 | 0.3 | 0.35 | 0.4 | 0.5 |
| First overlap ratio ds | 20% | 25% | 30% | 35% | 40% | 45% | 50% | 55% | 60% | 65% | 70% | 80% |
| Second overlap ratio es | 35% | 40% | 45% | 50% | 55% | 60% | 65% | 70% | 40% | 50% | 60% | 75% |
| Third overlap ratio fs | 33.3 % | 41.7 % | 50% | 58.3 % | 66.7 % | 75% | 83.3 % | 33.3 % | 50% | 58.3 % | 66.7 % | 83.3 % |
| First compres sion amount x | 0.15 | 0.2 | 0.25 | 0.3 | 0.15 | 0.2 | 0.25 | 0.3 | 0.15 | 0.2 | 0.25 | 0.3 |
| Second compres sion amount y | 0.33 | 0.4 | 0.45 | 0.5 | 0.55 | 0.6 | 0.65 | 0.7 | 0.4 | 0.5 | 0.6 | 0.715 |
| Third compres sion amount z | 0.15 | 0.2 | 0.25 | 0.3 | 0.3 | 0.25 | 0.2 | 0.15 | 0.15 | 0.2 | 0.25 | 0.3 |
| First compres sion ratio X₁ | 30% | 40% | 50% | 60% | 30% | 40% | 50% | 60% | 30% | 40% | 50% | 60% |
| Second compres sion ratio X₂ | 30% | 36.4 % | 40.9 % | 45.5 % | 50% | 54.5 % | 59.1 % | 63.6 % | 36.4 % | 45.5 % | 54.5 % | 65% |
| Third compres sion ratio X₃ | 6.12 % | 8.16 % | 10.2 % | 12.2 % | 12.2 % | 10.2 % | 8.16 % | 6.12 % | 6.12 % | 8.16 % | 10.2 % | 12.2 % |
| Test results: | Both helium leak test and penetrant test are passed | | | | | | | | | | | |
| Remark s: | The overlap amounts, the overlap ratios, the compression amounts, and the compression ratios all meet the specified value requirements | | | | | | | | | | | |

**Table 2 Experimental results of the comparative example (unit: mm)**

| | Compar ative Exampl e 1 | Compar ative Exampl e 2 | Compar ative Exampl e 3 | Compar ative Exampl e 4 | Compar ative Exampl e 5 | Compar ative Exampl e 6 | Compar ative Exampl e 7 | Compar ative Exampl e8 |
|---|---|---|---|---|---|---|---|---|
| First overlap amount d | 0.1 | 0.15 | 0.2 | 0.5 | 0.15 | 0.9 | 0.5 | 0.95 |
| Second overlap amount e | 0.2 | 0.3 | 0.4 | 0.75 | 0.15 | 0.8 | 0.6 | 0.85 |
| Third overlap amount f | 0.1 | 0.15 | 0.3 | 0.45 | 0.05 | 0.55 | 0.3 | 0.55 |
| First overlap ratio ds | 10% | 15% | 20% | 50% | 15% | 90% | 50% | 95% |
| Second overlap ratio es | 20% | 30% | 40% | 75% | 15% | 80% | 60% | 85% |
| Third overlap ratio fs | 16.7% | 25% | 50% | 75% | 8.3% | 91.7% | 50% | 91.7% |
| First compre ssion amount x | 0.2 | 0.3 | 0.05 | 0.1 | 0.05 | 0.2 | 0.4 | 0.45 |
| Second compre ssion amount y | 0.5 | 0.6 | 0.1 | 0.2 | 0.2 | 0.5 | 0.8 | 0.9 |
| Third compre ssion amount z | 0.3 | 0.2 | 0.05 | 0.1 | 0.05 | 0.3 | 0.5 | 0.6 |
| First compre ssion ratio X₁ | 40% | 60% | 10% | 20% | 10% | 40% | 80% | 90% |
| Second compre ssion ratio X₂ | 45.5% | 54.5% | 9.1% | 18.2% | 18.2% | 45.5% | 72.7% | 81.8% |
| Third compre ssion ratio X₃ | 12.2% | 8.16% | 2.04% | 4.08% | 2.04% | 12.2% | 20.4% | 24.5% |
| Test results: | Helium leak test and penetrant test are failed; and after disassembly of the battery cover, a deformation at a compressed portion of the seal ring is recoverable | | | | | Both helium leak test and penetrant test are passed; after disassembly of the battery cover, a deformation at a compressed portion of the seal ring is irrecoverable, plastic strength is reduced, and the weight of the seal ring is relatively large | | |
| Remark s: | The overlap amounts and the overlap ratios are too small; the compression amounts and the compression ratios are within normal range | | The overlap amounts and the overlap ratios are within normal range; the compression amounts and the compression ratios are too small | | The overlap amounts , the overlap ratios, the compres sion amounts , and the compres sion ratios are too small | The overlap amounts and the overlap ratios are too large; the compres sion amounts and the compres sion ratios are within normal range | The overlap amounts and the overlap ratios are within normal range; the compres sion amounts and the compres sion ratios are too large | The overlap amounts , the overlap ratios, the compres sion amounts , and the compres sion ratios are too large |

It should be noted that the helium leak test refers to testing the gas-tightness of the battery cover using a helium mass spectrometer. The test requirement is that at the electrode post of the battery cover, helium gas at 1.2 MPa is applied both from inside to outside and from outside to inside for 30 s. The seal is considered satisfactory if the measured helium leak rate is less than 1×10⁻⁷ Pa·m³/s.

It should be noted that the penetrant test includes the steps of cleaning, penetrating, and developing. Specifically, the surface of the battery cover is first cleaned with a cleaning agent and left to dry for 5 min to 10 min. A penetrant is then applied with a nozzle 20 mm to 30 mm from the battery cover surface for 5 min to 15 min, ensuring that the surface is fully wetted. After shaking a developer thoroughly, the developer is sprayed evenly from a distance of 300 mm from the battery cover. After spraying the developer, the battery cover is disassembled for observation. No residual penetrant at the seal ring indicates that the penetrant test is passed.

According to an embodiment of the present disclosure, in a second aspect, an electric device is further provided, which includes the battery described above.

It is apparent that the embodiments described above are provided merely to illustrate examples clearly and do not constitute a limitation on the embodiments. Although the embodiments of the present disclosure are described in conjunction with the drawings, those skilled in the art can make various modifications and variations without departing from the spirit and scope of the present disclosure, and such modifications and variations fall within the scope defined by the present disclosure.

## Claims

1. A battery, comprising:
a plate body, wherein a through hole is formed through the plate body;
an electrode post at least partially extending through the through hole along an axial direction, wherein the electrode post has an abutment portion abutting against a first side of the plate body and a penetrating portion penetrating out of a second side of the plate body;
a mounting member, adapted to fixedly connect the penetrating portion with the plate body;
a first insulating member, abutted between the mounting member and the second side of the plate body;
a second insulating member, abutted between the abutment portion and the first side of the plate body; and
a multi-layer seal ring, sleeved on an outer peripheral side of the electrode post, wherein the multi-layer seal ring is staggeredly arranged in a stepped manner, and each layer of the multi-layer seal ring abuts against the first insulating member, the plate body and the second insulating member in an radial direction and compresses the first insulating member, the plate body and the second insulating member in an axial direction, **characterized in that**:
a first overlap amount between a first seal layer of the multi-layer seal ring and the second insulating member is d, d satisfies: d = A/2 - a/2, a first layer overlap ratio between the first seal layer of the multi-layer seal ring and a first layer of the second insulating member is ds, and ds satisfies: ds = d / (A/2 - B/2), where A is an aperture of the first seal layer of the multi-layer seal ring, a is an aperture of the second insulating member, and B is an aperture of a second seal layer of the multi-layer seal ring; the first overlap amount refers to a size of an overlapping region in the axial direction between the first seal layer of the multi-layer seal ring and the second insulating member, the first layer overlap ratio refers to a proportion of the first overlap amount relative to a size of the first seal layer of the multi-layer seal ring in the axial direction, and the first layer overlap ratio ds between the first seal layer of the multi-layer seal ring and the first layer of the second insulating member has a range of 20% ≤ ds ≤ 80%;
and/or, a second overlap amount between a second seal layer of the multi-layer seal ring and the plate body is e, e satisfies: e = B/2 - b/2, a second layer overlap ratio between the second seal layer of the multi-layer seal ring and a second layer of the plate body is es, and es satisfies: es = e / (B/2 - C/2), wherein B is an aperture of the second seal layer of the multi-layer seal ring, b is an aperture of the through hole of the plate body, and C is an aperture of a third seal layer of the multi-layer seal ring; the second overlap amount refers to a size of an overlapping region in the axial direction between the second seal layer of the multi-layer seal ring and the plate body, and the second layer overlap ratio refers to a proportion of the second overlap amount relative to a size of the second seal layer of the multi-layer seal ring in the axial direction, and the second layer overlap ratio between the second seal layer of the multi-layer seal ring and the second layer of the plate body has a range of 35% ≤ es ≤ 75%;
and/or, a third overlap amount between a third seal layer of the multi-layer seal ring and the first insulating member is f, f satisfies: f = C/2 - c/2, a third layer overlap ratio between the third seal layer of the multi-layer seal ring and a third layer of the first insulating member is fs, and fs satisfies: fs = f / (C/2 - D/2), wherein C is an aperture of the third seal layer of the multi-layer seal ring, c is an aperture of the first insulating member, and D is a diameter of the electrode post; and the third overlap amount refers to a size of an overlapping region in the axial direction between the third seal layer of the multi-layer seal ring and the first insulating member, the third layer overlap ratio refers to a proportion of the third overlap amount relative to a size of the third seal layer of the multi-layer seal ring in the axial direction, and the third layer overlap ratio fs between the third seal layer of the multi-layer seal ring and the third layer of the first insulating member has a range of 33.3% ≤ fs ≤ 83.3%.

2. The battery as claimed in claim 1, wherein the multi-layer seal ring comprises three seal layers, and the three seal layers are arranged axially in a three-layer stepped manner.

3. The battery as claimed in claim 1, wherein the overlap amount d between the first seal layer of the multi-layer seal ring and the second insulating member has a range of 0.2 mm ≤ d ≤ 0.8 mm; and/or, the overlap amount e between the second seal layer of the multi-layer seal ring and the plate body has a range of 0.35 mm ≤ e ≤ 0.75 mm;
and/or, the overlap amount f between the third seal layer of the multi-layer seal ring and the first insulating member has a range of 0.2 mm ≤ f ≤ 0.5 mm.

4. The battery as claimed in claim 1, wherein a compression amount of the first seal layer of the multi-layer seal ring is x, and x satisfies x = M - m, where M is an original height of the first seal layer of the multi-layer seal ring, and m is a distance between a bottom surface of the second insulating member in the axial direction and a bottom surface of the multi-layer seal ring in the axial direction;
and/or, a compression amount of the second seal layer of the multi-layer seal ring is y, and y satisfies y = N - n, where N is an original height of the second seal layer of the multi-layer seal ring, and n is a distance between a bottom surface of the plate body in the axial direction and a bottom surface of the multi-layer seal ring along the axial direction;
and/or, a compression amount of the third seal layer of the multi-layer seal ring is z, and z satisfies z = O - o, where O is an original height of the third seal layer of the multi-layer seal ring, and o is a distance between a bottom surface of the first insulating member in the axial direction and a bottom surface of the multi-layer seal ring along the axial direction.

5. The battery as claimed in claim 4, wherein the compression amount x of the first seal layer of the multi-layer seal ring has a range of 0.15 mm ≤ x ≤ 0.3 mm;
and/or, the compression amount y of the second seal layer of the multi-layer seal ring has a range of 0.35 mm ≤ y ≤ 0.7 mm;
and/or, the compression amount z of the third seal layer of the multi-layer seal ring has a range of 0.15 mm ≤ z ≤ 0.3 mm.

6. The battery as claimed in claim 4, wherein a compression ratio of the first seal layer of the multi-layer seal ring is X₁, and X₁ satisfies X₁ = x / M;
and/or, a compression ratio of the second seal layer of the multi-layer seal ring is X₂, and X₂ satisfies X₂ = y / N;
and/or, a compression ratio of the third seal layer of the multi-layer seal ring is X₃, and X₃ satisfies X₃ = z / O.

7. The battery as claimed in claim 6, wherein the compression ratio X₁ of the first seal layer of the multi-layer seal ring has a range of 30%-60%;
and/or, the compression ratio X₂ of the second seal layer of the multi-layer seal ring has a range of 30%-65%;
and/or, the compression ratio X₃ of the third seal layer of the multi-layer seal ring has a range of 6%-12%.

8. The battery as claimed in claim 7, wherein the compression ratio X₁ of the first seal layer of the multi-layer seal ring is 40%;
and/or, the compression ratio X₂ of the second seal layer of the multi-layer seal ring is 40%;
and/or, the compression ratio X₃ of the third seal layer of the multi-layer seal ring is 10%.

9. An electric device, comprising:
the battery according to any one of claims 1 to 8.
